# EUROPÄISCHE PATENTSCHRIFT

(11) **EP 3 089 890 B1**
(45) Veröffentlichungstag und Bekanntmachung des Hinweises auf die Patenterteilung: **27.06.2018**
(21) Anmeldenummer: 14792454.2
(22) Anmeldetag: 28.10.2014
(51) Int. Cl.: B60R 5/04

(54) **ABDECKVORRICHTUNG EINES KOFFERRAUMFACHS EINES KRAFTFAHRZEUGS**
COVER FOR THE LUGGAGE COMPARTMENT OF AN AUTOMOBILE
RECOUVREMENT D'UN COMPARTIMENT À BAGAGES D`UN VÉHICULE AUTOMOBILE

(30) Priorität: 30.12.2013 DE 102013022154
(43) Veröffentlichungstag der Anmeldung: 09.11.2016
(73) Patentinhaber: Volkswagen Aktiengesellschaft, 38440 Wolfsburg (DE)
(72) Erfinder: GAUGER, Stefan, 38446 Wolfsburg (DE)
(86) Internationale Anmeldenummer: PCT/EP2014/073129
(87) Internationale Veröffentlichungsnummer: WO 2015/101429

(56) Entgegenhaltungen:
- EP-A2- 1 225 094
- DE-A1- 19 856 741
- DE-A1-102006 008 873

## Beschreibung

Die Erfindung betrifft eine Abdeckvorrichtung für einen Laderaum eines Kraftfahrzeugs, mit einer zumindest abschnittsweise flexiblen Laderaumabdeckung, die aus einer Speichervorrichtung entgegen einer Federkraft in eine Gebrauchsstellung ausziehbar ist, wobei die Laderaumabdeckung an ihrem freien Ende eine Lagerstange aufweist, die sich über die Breite der Laderaumabdeckung erstreckt und an ihren freien Enden jeweils ein Führungselement aufweist, und mit einer Führungseinrichtung, die zwei parallel zueinander verlaufende Führungsschienen aufweist, in welcher die Führungselemente führbar sind, und mit mindestens einer Arretiervorrichtung zum lösbaren Arretieren der Führungselemente in den Führungsschienen, wobei die Arretiervorrichtung einen Rastvorsprung in jeder Führungsschiene aufweist, an welchem das jeweilige Führungselement entgegen der Federkraft mit einer Rastnase verrastbar ist, und wobei durch ein Verkippen der Lagerstange mittels eines Betätigungselementes in eine erste Richtung die jeweilige Rastnase über den jeweiligen Rastvorsprung zum Lösen der Arretierung anhebbar ist.

Aus dem Stand der Technik sind Abdeckvorrichtungen der eingangs genannten Art bekannt. Um den Inhalt eines Laderaums eines Kraftfahrzeugs vor Blicken von außen oder auch vor Sonneneinstrahlung zu schützen, ist es bekannt, dem Laderaum eines Kraftfahrzeugs eine Abdeckvorrichtung zuzuordnen, mit welcher ein Benutzer den Laderaum bei Bedarf verdecken kann. Häufig ist dabei eine Laderaumabdeckung in Form eines flexiblen Rollos vorgesehen, das aus einer Speichervorrichtung, die dann als Wickelvorrichtung ausgebildet ist, entgegen einer Federkraft der Speichervorrichtung in eine Gebrauchsstellung ausziehbar ist, in welcher der Laderaum teilweise oder vollständig verdeckt ist. Um die Laderaumabdeckung in der Gebrauchsstellung arretieren zu können, ist sinnvollerweise eine Arretiervorrichtung vorgesehen, die mit dem freien Ende der Laderaumabdeckung zusammenwirkt, wobei hierzu die Laderaumabdeckung in der Regel ein steifes Endelement, wie beispielsweise eine sich über die gesamte Breite erstreckenden Lagerstange aufweist, an deren freien seitlichen Enden jeweils ein Führungselement vorgesehen ist, das in einer Führungsschiene geführt verlagerbar und in zumindest einer Position in der Führungsschiene arretierbar ist.

So offenbart beispielsweise die EP 1 923 269 B1 eine Abdeckvorrichtung der gattungsgemäßen Art, bei welcher die Führungselemente durch ein Verkippen einer endseitigen Lagerstange in eine Arretierstellung in Aussparungen der Führungsschiene einbringbar sind. Durch ein Zurückverkippen der Lagerstange kann die Arretierung wieder gelöst werden. Ähnliche Abdeckvorrichtungen sind auch aus der DE 10 2008 061 106 A1, der DE 10 2006 008 873 B4 und der DE 102 56 348 B4 bekannt. Aus der EP 1 225 094 Ist eine Abdeckvorrichtung nach dem Oberbegriff des Anspruchs 1 bekannt.

Die bekannten Abdeckvorrichtungen haben jedoch den Nachteil, dass ein Lösen der Arretierung stets nur durch ein Verkippen der Lagerstange in nur eine Richtung möglich ist. Ist der Laderaum jedoch derart weit gefüllt, dass ein Verkippen der Lagerstange, die häufig auch mit einem steifen Endbord (Endbrett) verbunden ist, wie beispielsweise in der DE 102 56 348 B4 gezeigt, in diese Richtung nicht möglich ist, weil beispielsweise das Endbord gegen das Ladegut stößt, ist ein Öffnen der Laderaumabdeckung ohne vorheriges Entladen von Ladegut nicht möglich.

Der Erfindung liegt somit die Aufgabe zugrunde, eine Abdeckvorrichtung zu schaffen, die in jedem Fall ein einfaches Lösen der Arretierung ermöglicht, auch dann, wenn ein Verkippen der Lagerstange in die erste Richtung nicht möglich ist.

Die der Erfindung zugrunde liegende Aufgabe wird durch eine Abdeckvorrichtung mit den Merkmalen des Anspruchs 1 gelöst. Diese hat den Vorteil, dass durch ein Verkippen der Lagerstange in die entgegengesetzte Richtung, die Arretierung ebenfalls gelöst und die Laderaumabdeckung in ihre Ausgangsstellung zurückverbracht werden kann. Dies wird erfindungsgemäß dadurch erreicht, dass den zu der Lagerstange verkippbar angeordneten Führungselementen mindestens eine, vorzugsweise jeweils eine, Hebeleinrichtung zugeordnet ist, die die Rastnasen über die Rastvorsprünge hebt beziehungsweise anhebt, wenn die Lagerstange in die zweite Richtung verkippt wird. Es ist erfindungsgemäß also vorgesehen, dass das jeweilige Führungselement nicht starr sondern verkippbar beziehungsweise verdrehbar zu der Lagerstange mit dieser verbunden ist. Dadurch ist die Kippbewegung des jeweiligen Führungselementes zumindest über einen vorgebbaren Kippbereich unabhängig von der Lagerstange. Durch die jeweilige Hebeleinrichtung, die zweckmäßigerweise mit der Lagerstange zusammenwirkt, wird das jeweilige Führungselement bei einem Verkippen der Lagerstange in die zweite Richtung entgegen der Kipprichtung der Lagerstange derart betätigt, dass die jeweilige Rastnase von dem Rastvorsprung gelöst beziehungsweise über den Rastvorsprung angehoben wird, wodurch die Arretierung gelöst wird. Durch den einfachen Aufbau mit der Hebeleinrichtung wird die der Erfindung zugrundeliegende Aufgabe auf einfache und auch kostengünstige Art und Weise gelöst. Sind die Führungselemente miteinander wirkverbunden, so reicht eine Hebeleinrichtung zur Betätigung beider Führungselemente aus. Andernfalls ist bevorzugt jedem Führungselement eine entsprechende Hebeleinrichtung zugeordnet.

Gemäß einer bevorzugten Weiterbildung der Erfindung ist vorgesehen, dass die Hebeleinrichtung mit dem jeweiligen Führungselement einen Scherenhebel bildet, wozu das jeweilige Führungselement durch ein Drehgelenk mit einem jeweiligen Hebelelement scherenartig verbunden ist. Das Hebelelement und das Führungselement sind somit zumindest bereichsweise nebeneinander angeordnet und an dieser Stelle drehgelenkig miteinander verbunden. Hierdurch wird ein besonders einfacher Hebelmechanismus zur Betätigung des Führungselementes geboten. Durch die Scherenausbildung wird erreicht, dass bei einer Bewegung des Hebelelementes in die eine Richtung das Führungselement in die andere Richtung bewegt wird. Besonders bevorzugt wird das Drehgelenk durch einen das Führungselement zu dessen drehbarer Lagerung zumindest im Wesentlichen durchdringenden Lagerbolzen gebildet, der insbesondere an dem Hebelelement angeordnet ist.

Weiterhin ist bevorzugt vorgesehen, dass das Drehgelenk eine Drehachse bildet, um welche das Führungselement und das Hebelelement zumindest bereichsweise gegeneinander verdrehbar sind, wobei sich die Drehachse parallel zur Längserstreckung beziehungsweise zur Kippachse der Lagerstange erstreckt. Dadurch wird eine für den Benutzer angenehme und leicht nachvollziehbare Betätigung der Abdeckvorrichtung gewährleistet. Zudem ist hierdurch eine besonders bauraumsparende Ausgestaltung der Erfindung möglich. Dabei wird vorteilhafterweise erreicht, dass das Führungselement um die gleiche Drehachse gekippt wird, um welche auch die Lagerstange gekippt wird.

Ferner ist bevorzugt vorgesehen, dass das jeweilige Hebelelement eine zur Drehachse beabstandete Gleitspitze zur gleitenden Auflage auf der Führungsschiene aufweist und fest mit der Lagerstange verbunden ist. Im Unterschied zu dem Führungselement ist das Hebelelement also fest mit der Lagerstange verbunden, sodass das Hebelelement in seiner Kippstellung stets der Lagerstange entspricht. Die Gleitspitze dient zur Auflage auf der Führungsschiene, sodass das Hebelelement und damit auch die Lagerstange an der Gleitspitze auf der Führungsschiene abstützbar ist. Hierdurch wird erreicht, dass bei einem Verkippen der Lagerstange in die erste Richtung die Drehachse von der Führungsschiene angehoben wird, um die Rastnase über den Rastvorsprung anzuheben. Weist das Führungselement auf der der Gleitspitze gegenüberliegenden Seite der Drehachse ein entsprechend hohes Gewicht auf, so wird erreicht, dass sich das Hebelelement und das Führungselement beim Anheben der Drehachse scherenartig zueinander bewegen, wodurch die Rastnase über den Rastvorsprung auf einfache Art und Weise gehoben wird.

Gemäß einer bevorzugten Weiterbildung der Erfindung ist vorgesehen, dass die Führungsschienen ein U-förmiges Profil aufweisen und einander zugewandt ausgerichtet sind, wobei ein jeweils untenliegender Schenkel der Führungsschienen eine Gleitschiene bildet, auf welcher das Hebelelement und das Führungselement gleitend gelagert sind. Hierdurch wird die Lagerstange mit den Führungselementen sicher sowohl seitlich als auch in der Höhe entlang des Laderaums geführt. Besonders bevorzugt erstrecken sich die Führungsschienen über den gesamten Laderaum hinweg, sodass die Laderaumabdeckung stets in den Führungsschienen geführt ist. Denkbar ist es jedoch auch, die Führungsschiene nur im Bereich der Gebrauchsstellung beziehungsweise der Arretiervorrichtung vorzusehen.

Weiterhin ist bevorzugt vorgesehen, dass der jeweilige Rastvorsprung der Arretiervorrichtung derart schmal auf der Gleitschiene ausgebildet ist, dass das Hebelelement mit der Gleitspitze auf der Gleitschiene an dem Rastvorsprung vorbeischiebbar ist. Hierdurch ergibt sich der Vorteil, dass sich der Rastvorsprung nur in einem Bereich erstreckt, der von dem Führungselement bei einem Verfahren der Laderaumabdeckung entlang der Führungsschienen befahren wird. Dadurch kann das Hebelelement unabhängig von seiner Kippstellung an dem Rastvorsprung vorbeigeführt werden, sofern das Führungselement entsprechend mit seiner Rastnase über den Rastvorsprung angehoben ist.

Gemäß einer vorteilhaften Weiterbildung der Erfindung ist vorgesehen, dass die Führungsschienen jeweils auf den dem Vorsprung gegenüberliegenden Schenkel einen Betätigungsvorsprung aufweisen, der in der arretierten Stellung des Führungselementes einem Betätigungsende des Führungselements beabstandet zur Drehachse zugeordnet ist, um dieses an der Gleitschiene zu halten, wenn die Lagerstange in die zweite Richtung verkippt wird. Durch das Verkippen der Lagerstange in die zweite Richtung wird, wie bereits erwähnt, die Drehachse ebenfalls angehoben. Durch den Betätigungsvorsprung wird sichergestellt, dass das Führungselement an dem der Rastnase gegenüberliegenden Ende weniger weit angehoben wird wie die Drehachse, sodass aufgrund der Hebelwirkung die Rastnase über den Rastvorsprung hinaus angehoben wird, wenn das Hebelelement sich mit seiner Gleitspitze an der Gleitschiene abstützt und die Drehachse angehoben wird. Hierdurch wird unabhängig von dem Gewicht des Führungselements an dem der Rastnase gegenüberliegenden Ende auf einfache Art und Weise das sichere Lösen der Rastnase von dem Rastvorsprung bei einem Verkippen der Lagerstange in die zweite Richtung gewährleistet.

Besonders bevorzugt ist vorgesehen, dass das jeweilige Hebelelement eine Drehmitnahme für das jeweilige Führungselement aufweist, um die Rastnasen von dem Rastvorsprüngen zu lösen, wenn die Lagerstange in die erste Richtung verkippt wird. Da das jeweilige Hebelelement starr mit der Lagerstange verbunden ist, wird durch die Rastnase gewährleistet, dass, wenn das Hebelelement durch die Lagerstange in die erste Richtung verkippt wird, die Rastnasen ebenfalls über den Rastvorsprung angehoben werden. In die erste Kipprichtung gesehen wird die Verdrehbarkeit des Führungselements beziehungsweise des Hebelelements entsprechend begrenzt. Dadurch wird auf einfache Art und Weise das sichere Lösen der jeweiligen Rastnase von dem Rastvorsprung bei einem Verkippen der Lagerstange in die erste Richtung gewährleistet.

Gemäß einer vorteilhaften Weiterbildung der Erfindung ist vorgesehen, dass der Lagerstange als Betätigungselement ein zumindest im Wesentlichen steifes Endbord zugeordnet ist, das zum Verkippen der Lagerstange fest mit dieser verbunden ist. Ein Benutzer kann somit auf einfache Art und Weise durch Anheben oder Niederdrücken des Endbords die Arretierung lösen. Besonders bevorzugt weist das Endbord außerdem eine Griffeinrichtung auf, die zum Betätigen des Endbords und das Verkippen der Lagerstange vereinfacht.

Ferner ist bevorzugt vorgesehen, dass die einander gegenüberliegenden Schenkel der jeweiligen Führungsschiene im Wesentlichen parallel zueinander verlaufen und nur im Bereich der Arretiervorrichtung einen größeren Abstand zueinander aufweisen. Der größere Abstand gewährleistet das einwandfreie Funktionieren des Scherenhebels auch dann, wenn der Rastvorsprung vergleichsweise groß ausgebildet ist. Insgesamt wird dadurch ermöglicht, dass eine sichere Arretierung durch einen entsprechend großen Rastvorsprung zur Verfügung gestellt wird, wenn gleichzeitig ein sicheres Lösen der Arretierung durch ein Verkippen der Lagerstange in beide Richtungen sicher gewährleistet ist.

Im Folgenden soll die Erfindung anhand eines Ausführungsbeispiels näher erläutert werden. Dazu zeigen
- Figur 1: eine Abdeckvorrichtung für einen Laderaum in einer perspektivischen Darstellung,
- Figur 2: Eine Längsschnittdarstellung der Abdeckvorrichtung,
- Figur 3: eine Detailansicht der Abdeckvorrichtung,
- Figur 4: die Detailansicht in einer Explosionsdarstellung
- Figur 5: eine vergrößerte Längsschnittdarstellung der Abdeckvorrichtung in einer Gebrauchsstellung,
- Figur 6: die Abdeckvorrichtung in einer vergrößerten Längsschnittdarstellung in einer ersten Auslösestellung und
- Figur 7: die Abdeckvorrichtung in einer Längsschnittdarstellung in einer zweiten Auslösestellung.

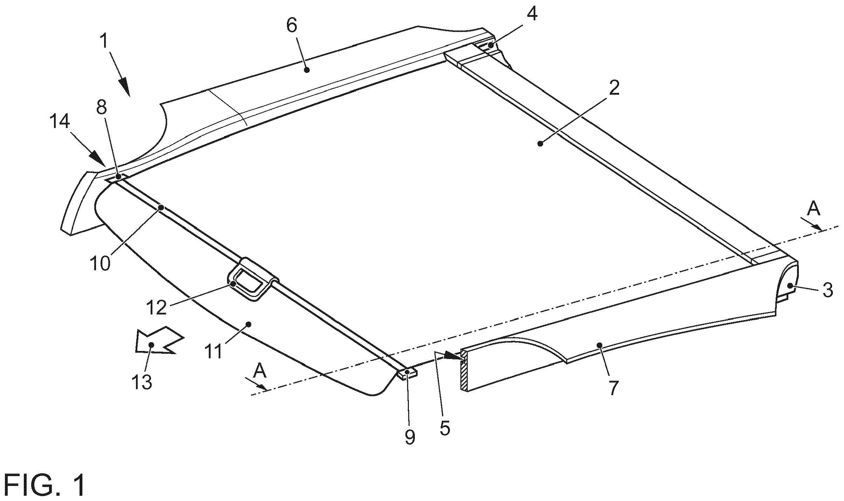

Figur 1 zeigt in einer perspektivischen Darstellung eine Abdeckvorrichtung 1 für einen Laderaum eines Kraftfahrzeugs. Die Abdeckvorrichtung 1 weist im Wesentlichen eine flexible Laderaumabdeckung 2, eine Speichervorrichtung 3, die als Wickelvorrichtung zum Aufwickeln der Laderaumabdeckung 2 ausgebildet ist, sowie zwei parallel zueinander verlaufende Führungsschienen 4, 5 auf, in welchen die Laderaumabdeckung 2 geführt ist. Die beiden Führungsschienen 4, 5 sind in Seitenwandelementen 6, 7 eingesetzt und im Querschnitt gesehen U-förmig ausgebildet. Dabei sind die Führungsschienen 4, 5 einander zugewandt ausgerichtet, so dass der Laderaumabdeckung 2 zugeordnete Führungselemente 8, 9 auf einem jeweils unteren Schenkel der jeweiligen Führungsschiene aufliegend verschiebbar sind. Die Führungselemente 8, 9 sind dabei einer Lagerstange 10 zugeordnet, die sich über die gesamte Breite der Laderaumabdeckung 2 an ihrem freien Ende erstreckt. Die Lagerstange 10 ist mit einem steifen Endbord 11 verbunden, das ein Betätigungselement bildet, wobei an dem Endbord 11 optional eine durchgreifbare Griffeinrichtung 12 ausgebildet und drehfest mit der Lagerstange 10 verbunden ist. Bezüglich der übrigen Laderaumabdeckung 2 ist die Lagerstange 10 mittels des Endbords 11 oder der Griffeinrichtung 12 um ihre Längsachse verkippbar.

In der in Figur 1 dargestellten Situation ist die Laderaumabdeckung 2 in eine Gebrauchsstellung aus der Speichervorrichtung 3 gemäß Pfeil 13 ausgezogen, in welcher die Lagerstange 10 arretierbar ist. Dazu weist die Abdeckvorrichtung eine Arretiereinrichtung 14 auf, die im Folgenden näher erläutert werden soll.

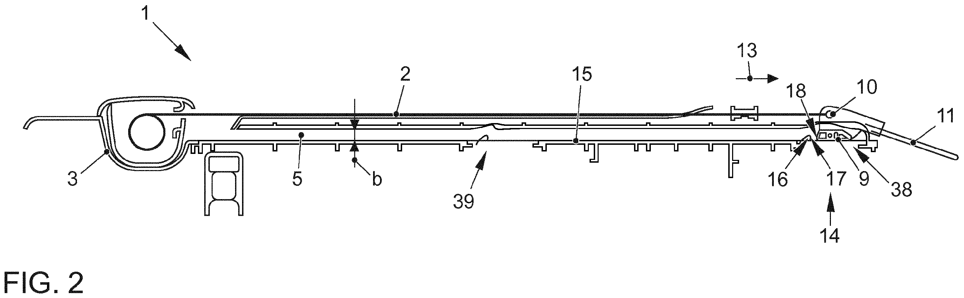

Figur 2 zeigt dazu in einer Längsschnittdarstellung die Abdeckvorrichtung 1 gemäß Linie A-A aus Figur 1. Die Schienen 4, 5 weisen durchgehend eine konstante Breite b auf. Nur im Bereich der Arretiervorrichtung 14 wird die Breite b vergrößert. Die Arretiervorrichtung 14 weist auf dem jeweiligen Schenkel, auf welchem das jeweilige Führungselement 8, 9 aufliegt, der insofern eine Gleitschiene 15 bildet, einen Rastvorsprung 16 auf, an welchem das Führungselement 8, 9 entgegen einer Federkraft der Speichervorrichtung 3, die die Laderaumabdeckung 2 in die Speichervorrichtung 3 zieht, verrastbar ist. Durch das Verrasten wird die Laderaumabdeckung 2 in der Gebrauchsstellung gehalten. Vorzugsweise ist vorgesehen, wie in Figur 2 dargestellt, dass mindestens eine zweite Arretiervorrichtung 39 vorgesehen ist, die identisch zu der Arretiervorrichtung 14 ausgebildet und beispielsweise auf halber Strecke zwischen der Speichervorrichtung 3 und der Arretiervorrichtung 14 angeordnet ist. Dadurch lässt sich die Laderaumabdeckung 2 auch in einer zweiten Gebrauchsstellung verrasten.

Die Rastvorsprünge 16 weisen in Ausziehrichtung gemäß Pfeil 13 eine Anlaufschräge auf, durch welche das jeweilige Führungselement 8, 9 beim Ausziehen automatisch über den jeweiligen Rastvorsprung 16 gehoben wird. Auf der gegenüberliegenden Seite weist der Rastvorsprung 16 eine Vertiefung 17 auf, die mit einer Rastnase 18 des jeweiligen Führungselementes 8, 9 zusammenwirkt, wenn die Rastnase 18 in die Vertiefung 17 durch die Federkraft der Speichervorrichtung 3 gezogen wird. In der verrasteten Stellung überfängt somit der Rastvorsprung 16 die Rastnase 18 bereichsweise. Alternativ kann vorgsehen sein, dass die Rückseite des Rastvorsprungs 16 eine gerade und insbesondere zur Gleitschiene 15 senkrecht ausgerichtete Anschlagfläche aufweist.

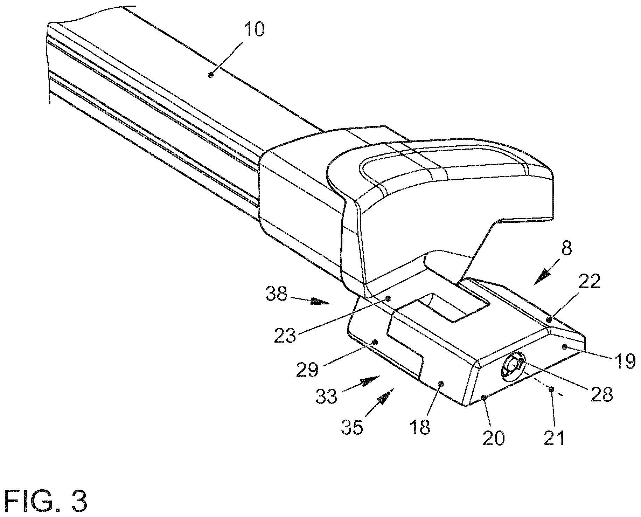

Figur 3 zeigt ein seitliches Ende der Lagerstange 10 mit dem daran angeordneten Führungselement 8. Die Führungselemente 8, 9 sind bezüglich der Längserstreckung der Laderaumabdeckung 2 spiegelsymmetrisch ausgebildet, so dass die Beschreibung bezüglich des Führungselements 8 gleichermaßen auch für die Ausführungsform des Führungselementes 9 gilt. Das Führungselement 8 ist als Gleitstein 19 ausgebildet, der eine ebene Unterseite 20 zur gleitenden Auflage auf der Gleitschiene 15 aufweist. Das Führungselement 8 ist dabei um eine Drehachse 21, die parallel zu der Längserstreckung der Lagerstange 10 ausgerichtet ist, verdrehbar zu der Lagestange 10 gelagert, wobei das Führungselement 8 derart ausgebildet ist, dass die Rastnase 18 auf einer Seite der Drehachse 21 liegt und ein Betätigungsende 22 auf der gegenüberliegenden Seite der Drehachse 21. Dabei ist bevorzugt vorgesehen, wie in Figur 3 dargestellt, dass die Drehachse 21 außermittig in Bezug auf die Längserstreckung des Führungselementes 8 in der vorderen Hälfte, also näher zu der Rastnase 18 als zu dem Betätigungsende 22 angeordnet ist. Auf die Funktion des Betätigungsendes 22 wird später näher eingegangen.

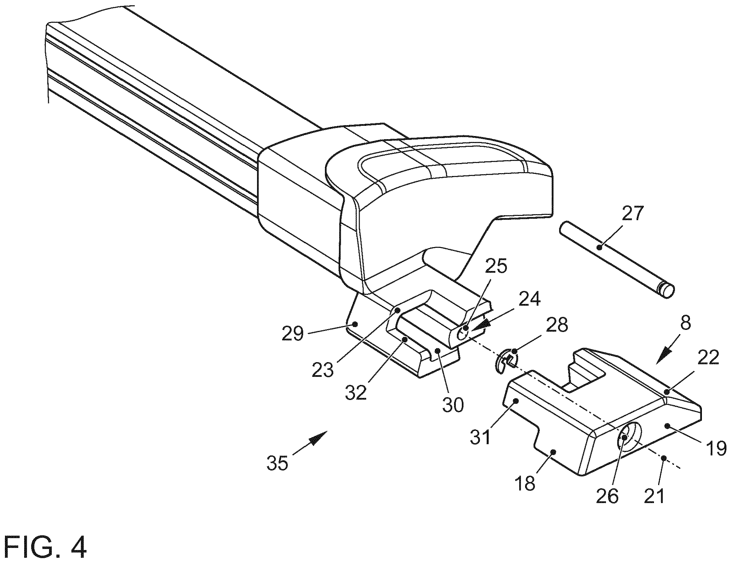

Dem Führungselement 8 ist weiterhin ein Hebelelement 23 zugeordnet, das fest mit der Lagerstange 10, in dem vorliegenden Ausführungsbeispiel einstückig mit der Lagerstange 10 ausgebildet ist. Das Hebelelement 23 bildet für das Führungselement 8 ein Drehgelenk 24 zu dessen Verdrehung um die Achse 21. Dazu weist das Hebelelement 23 eine zylinderförmige Aufnahme 25 auf. Eine entsprechende Aufnahme 26 ist auch in dem Führungselement 8 vorgesehen. Durch beide Aufnahmen 25, 26 erstreckt sich ein Lagerbolzen 27, wie in Figur 4 in einer Explosionsdarstellung gezeigt ist. Der Lagerbolzen 27 wird durch einen Sicherungsring 28, wie in Figur 3 gezeigt, in der eingesteckten Position gehalten. Dadurch wird gleichzeitig das Führungselement 8 an dem Hebelelement 23 gehalten. Das Hebelelement 23 weist eine Gleitspitze 29 auf, die in einer in Figur 3 gezeigten Ausgangsstellung bündig mit der Rastnase 18 verläuft. Das Hebelelement 23 weist dabei außerdem eine seitliche Aussparung 30 auf, in welcher ein seitlicher Vorsprung 31 des Führungselementes 8 eingreift, wie in Figur 3 gezeigt. Die Aussparung 30 und der Vorsprung 31 sind dabei auf der gleichen Seite der Drehachse 21, nämlich auf der Seite der Rastnase 18 beziehungsweise der Gleitspitze 29 ausgebildet, wobei die Aussparung 30 eine Drehmitnahme 32 für das Führungselement 8 bildet, die ein Verdrehen des Führungselementes 8 gegen den Uhrzeigersinn gemäß Figur 4 begrenzt. Das Führungselement 8 und das Hebelelement 23 greifen im Wesentlichen komplementär ineinander, wobei das Führungselement 8 zumindest über einen bestimmten Winkelbereich unabhängig von dem Hebelelement 23 um die Drehachse 21 verschwenkbar beziehungsweise verdrehbar ist. Ausgehend von der Ausgangsstellung gemäß Figur 3 lässt sich das Führungselement 8 im Uhrzeigersinn zumindest über den bestimmten Winkelbereich um die Drehachse 21 verdrehen. In der Ausgangsposition, wenn die Rastnase 18 und die Gleitspitze 29 bündig miteinander abschließen, bilden das Führungselement 8 und das Hebelelement 23 eine Führungseinheit 33, die in der Führungsschiene 8 gleitgelagert verfahrbar ist. Zweckmäßigerweise entspricht dabei die Breite b der Führungsschiene 8 der Höhe der Führungseinheit 33.

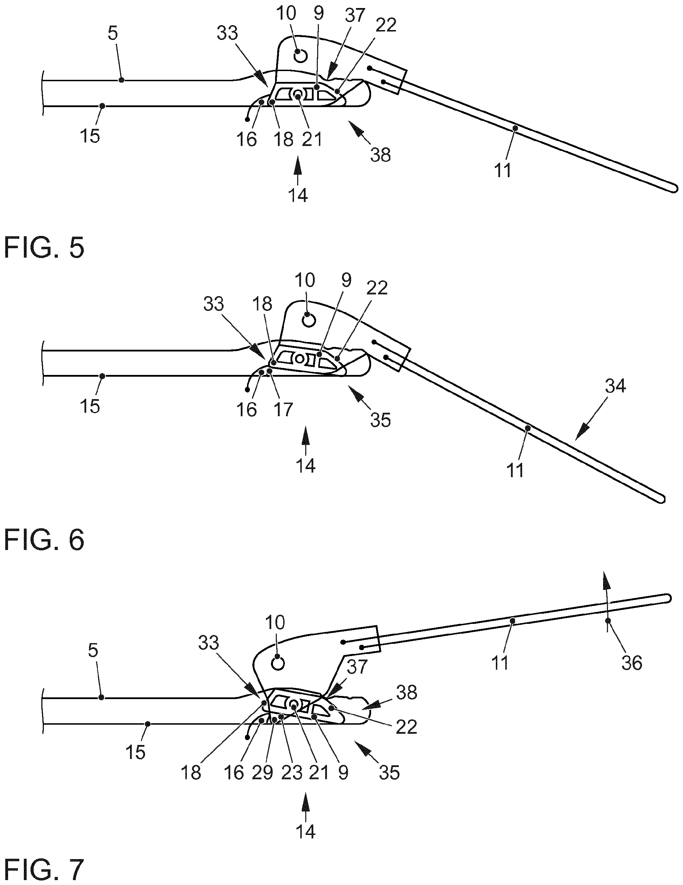

Figur 5 zeigt eine vergrößerte Darstellung der Arretiervorrichtung 14 aus Figur 2 in der Arretierstellung. Dabei liegt, wie zuvor bereits beschrieben, die Rastnase 18 an dem Rastvorsprung 16 an, wobei der Rastvorsprung 16 der Federkraft der Speichervorrichtung 3 entgegenwirkt. Wird nun die Lagerstange 10 in eine erste Richtung in Uhrzeigersinn mittels des Endbords 11 oder der Griffvorrichtung 12 verkippt, so zieht die Drehmitnahme 32 das Führungselement 9 mit der Rastnase 18 nach oben, wie in Figur 6 dargestellt. Die Führungselemente 8, 9 stützen sich dabei an ihrem jeweiligen Betätigungsende auf der jeweiligen Gleitschiene 19 ab. Durch das Verkippen der Lagerstange 10 im Uhrzeigersinn wird somit auf einfache Art und Weise die Rastnase 18 und auch die Gleitspitze 29 des Hebelelements 23 über den Rastvorsprung 16 angehoben, so dass die Federkraft der Speichereinrichtung 3 die Laderaumabdeckung 2 wieder einzieht beziehungsweise einziehen kann, sofern ein Benutzer nicht manuell eine entsprechende Gegenkraft aufbringt. Durch ein einfaches Nachuntendrücken des Endbords 11, wie durch einen Pfeil 34 angedeutet, lässt sich somit die Arretierung der Arretiervorrichtung 14 lösen.

Die beidseits der Lagerstange 10 angeordneten Führungseinheiten 33 stellen aufgrund der zuvor beschriebenen Ausbildung jeweils einen Scherenhebel 35 dar, der ein Lösen der Arretierung der Arretiervorrichtung 14 auch dann ermöglicht, wenn das Endbord 11 in die entgegengesetzte Richtung verlagert und die Lagerstange 10 entsprechend gegen den Uhrzeigersinn verkippt wird.

Figur 7 zeigt hierzu eine entgegen den Uhrzeigersinn verkippte Lagerstange 10, die durch ein Anheben des Endbords gemäß Pfeil 36 verkippt wurde. Durch das Verkippen entgegen den Uhrzeigersinn beziehungsweise durch das Anheben des Endbords 11 stütz sich die Lagerstange 10 durch die Gleitspitze 29 des Hebelelements 23 an der Gleitschiene 19 ab, wodurch die Drehachse 21 nach oben gehoben wird. Der der Gleitschiene 19 gegenüberliegende Schenkel der jeweiligen Schiene 4, 5 weist dem Betätigungsende 22 des jeweiliges Führungselements 8, 9 zugeordnet einen Betätigungsvorsprung 37 auf, der ein Anheben des Betätigungsendes 22 von der Gleitschiene 19 beim Anheben der Drehachse 21 verhindert. Dadurch wird gewährleistet, dass das jeweilige Führungselement 8, 9 um die Drehachse 21 im Uhrzeigersinn verkippt wird, wodurch die Rastnase 18, wie in Figur 7 gezeigt, über den Rastvorsprung 16 gehoben wird. Die vergrößerte Breite der Führungsschienen 4, 5 im Bereich der Arretiervorrichtung 14 erlaubt ein entsprechend weites Verschwenken des jeweiligen Führungselementes 8, 9. Der Rastvorsprung 16 ist dabei auf der Gleitschiene 19 derart schmal ausgebildet, dass er nur im Bereich des Führungselements 8 beziehungsweise 9 liegt, so dass das Hebelelement 23 mit der Gleitspitze 29 seitlich an dem jeweiligen Rastvorsprung 16 auf der Gleitschiene 19 vorbeischiebbar ist. Wird also die Rastnase 19 durch die Hebeleinrichtung 38 aus Hebelelement 23 und drehbaren Führungselementen 8, 9 der jeweiligen Führungseinheit 33 über den Rastvorsprung 16 angehoben, wenn das Endbord 11 nach oben gemäß Pfeil 36 angehoben wird, so wird die Arretierung der Arretiervorrichtung 14 gelöst und die Führungseinheit 33 kann in der Führungsschiene 5 in Richtung der Speichervorrichtung 3 verschoben werden, wobei das jeweilige Führungselement 8, 9 über den jeweiligen Rastvorsprung 16 und das jeweilige Hebelelement 29 an dem jeweiligen Rastvorsprung 16 vorbeigeführt wird.

Durch die vorteilhafte Ausbildung der Abdeckvorrichtung 1 wird erreicht, dass unabhängig davon, in welche Richtung das Endbord 11 bewegt beziehungsweise die Lagerstange 10 verkippt wird, stets ein Lösen der Arretiervorrichtung 14 oder auch 39 gewährleistet ist. Dies hat beispielsweise den Vorteil, dass wenn der Laderaum derart vollgepackt ist, dass das Endbord 11 nicht mehr in Richtung des Laderaums nach unten verkippbar ist, durch ein Anheben des Endbords die Arretierung dennoch gelöst werden kann.

Selbstverständlich ist es auch denkbar, die Breite der Führungsschiene 5 durchgehend konstant zu gestalten, also auch im Bereich der Arretiervorrichtungen 14 und 39. In dem Fall wäre lediglich die Führung zwischen den Arretiervorrichtungen 14, 39 und der Speichervorrichtung 3 mit einem größeren Spiel behaftet, das die gefühlte Wertigkeit der Abdeckvorrichtung 1 für den Benutzer verringern könnte. Funktionieren würde die Abdeckvorrichtung 1 jedoch gleichermaßen.

## Patentansprüche

1. Abdeckvorrichtung (1) für einen Laderaum eines Kraftfahrzeugs, mit einer zumindest abschnittsweise flexiblen Laderaumabdeckung (2), die aus einer Speichervorrichtung (3) entgegen einer Federkraft in eine Gebrauchsstellung ausziehbar ist, wobei die Laderaumabdeckung (2) an ihrem freien Ende eine Lagerstange (10) aufweist, die sich über die Breite der Laderaumabdeckung (2) erstreckt und an ihren freien Enden jeweils ein Führungselement (8,9) aufweist, mit einer Führungseinrichtung, die zwei parallel zueinander verlaufende Führungsschienen (4,5) aufweist, in welchen die Führungselemente (8,9) führbar sind, und mit zumindest einer Arretiervorrichtung (14,39) zum lösbaren Arretieren der Führungselemente (8,9) in den Führungsschienen (4,5), wobei die Arretiervorrichtung (14,39) einen Rastvorsprung (16) in jeder Führungsschiene (4,5) aufweist, an welchem das jeweilige Führungselement (8,9) entgegen der Federkraft mit einer Rastnase (18) verrastbar ist, und wobei durch ein Verkippen der Lagerstange (10) in eine erste Richtung mittels eines Betätigungselementes die jeweilige Rastnase (18) zum Lösen der Arretierung über den jeweiligen Rastvorsprung (16) anhebbar ist, **dadurch gekennzeichnet, dass** den zu der Lagerstange (10) verkippbar angeordneten Führungselementen (8,9) mindestens eine Hebeleinrichtung (38) zugeordnet ist, die die jeweilige Rastnase (18) über den jeweiligen Rastvorsprung (16) hebt, wenn die Lagerstange (10) in eine zweite der ersten Richtung entgegengesetzte Richtung verkippt wird.

2. Abdeckvorrichtung nach Anspruch 1, **dadurch gekennzeichnet, dass** die Hebeleinrichtung (38) mit dem jeweiligen Führungselement (8,9) einen Scherenhebel (35) bildet, wozu das jeweilige Führungselement (8,9) durch ein Drehgelenk (24) mit einem jeweiligen Hebelelement (23) scherenartig verbunden ist.

3. Abdeckvorrichtung nach Anspruch 2, **dadurch gekennzeichnet, dass** das Drehgelenk (24) eine Drehachse (21) bildet, um welche das Führungselement (8,9) und das Hebelelement (23) zumindest bereichsweise gegeneinander verdrehbar sind, wobei die Drehachse (21) parallel zur Längserstreckung der Lagerstange (10) ausgerichtet ist.

4. Abdeckvorrichtung nach Anspruch 3, **dadurch gekennzeichnet, dass** das jeweilige Hebelelement (23) eine zur Drehachse (21) beabstandete Gleitspitze (29) zur gleitenden Auflage auf der jeweiligen Führungsschiene (4,5) aufweist und fest mit der Lagerstange (10) verbunden ist.

5. Abdeckvorrichtung nach Anspruch 4, **dadurch gekennzeichnet, dass** die Führungsschienen (4,5) jeweils ein U-förmiges Profil aufweisen und einander zugewandt ausgerichtet sind, wobei ein jeweils unten liegender Schenkel der Führungsschienen (4,5) eine Gleitschiene (19) bildet, auf welcher das jeweilige Hebelelement (23) mit der Gleitspitze (29) aufliegt.

6. Abdeckvorrichtung nach Anspruch 5, **dadurch gekennzeichnet, dass** der jeweilige Rastvorsprung (16) der Arretiereinrichtung (14) derart schmal auf der jeweiligen Gleitschiene (19) angeordnet/ausgebildet ist, dass das jeweilige Hebelelement (23) mit seiner Gleitspitze (29) auf der Gleitschiene (19) an dem Rastvorsprung (16) vorbei schiebbar ist.

7. Abdeckvorrichtung nach einem der Ansprüche 5 oder 6, **dadurch gekennzeichnet, dass** die Führungsschienen (4,5) an dem dem Rastvorsprung (16) gegenüberliegenden Schenkel jeweils einen Betätigungsvorsprung (37) aufweisen, der in der Arretierstellung des jeweiligen Führungselements (8,9) einem Betätigungsende (22) des jeweiligen Führungselementes (8,9) beabstandet zur Drehachse (21) zugeordnet ist, um dieses an der Gleitschiene (19) zu halten, wenn die Lagerstange (10) in die zweite Richtung verkippt wird.

8. Abdeckvorrichtung nach einem der Ansprüche 2 bis 7, **dadurch gekennzeichnet, dass** das jeweilige Hebelelement (23) eine Drehmitnahme (32) für das jeweilige Führungselement (8,9) aufweist, um die Rastnasen (18) von den Rastvorsprüngen (16) zu lösen, wenn die Lagerstange (10) in die erste Richtung verkippt wird.

9. Abdeckvorrichtung nach einem der vorhergehenden Ansprüche, **dadurch gekennzeichnet, dass** der Lagerstange (10) als Betätigungselement ein zumindest im Wesentlichen steifes Endbord (11) zugeordnet ist, das zum Verkippen der Lagerstange (10) fest mit dieser verbunden ist.

10. Abdeckvorrichtung nach einem der vorhergehenden Ansprüche, **dadurch gekennzeichnet, dass** die einander gegenüberliegenden Schenkel der jeweiligen Führungsschiene (4,5) im Wesentlichen parallel zueinander verlaufen und nur im Bereich der Arretiervorrichtung (14,39) einen vergrößerten Abstand zueinander aufweisen.

## Claims

1. Cover device (1) for a luggage compartment of a motor vehicle, with a luggage compartment cover (2) which is flexible at least in sections and can be pulled out of a storage device (3) counter to a spring force into a use position, wherein the free end of the luggage compartment cover (2) has a bearing rod (10) which extends over the width of the luggage compartment cover (2) and at its free ends in each case has a guide element (8, 9), with a guide device which has two guide rails (4, 5) which run parallel to each other and in which the guide elements (8, 9) can be guided, and with at least one locking device (14, 39) for releasably locking the guide elements (8, 9) in the guide rails (4, 5), wherein the locking device (14, 39) has a latching projection (16) in each guide rail (4, 5), at which latching projection (16) the respective guide element (8, 9) can be latched counter to the spring force with a latching lug (18), and wherein, by tilting the bearing rod (10) in a first direction by means of an actuating element, the respective latching lug (18) can be raised above the respective latching projection (16) in order to release the locking, **characterized in that** the guide elements (8, 9) which are arranged tiltably with respect to the bearing rod (10) are assigned at least one lever device (38) which lifts the respective latching lug (18) above the respective latching projection (16) when the bearing rod (10) is tilted in a second direction opposed to the first direction.

2. Covering device according to Claim 1, **characterized in that** the lever device (38) forms a scissors lever (35) together with the respective guide element (8, 9), for which purpose the respective guide element (8, 9) is connected to a respective lever element (23) in the manner of scissors by means of a rotary joint (24).

3. Covering device according to Claim 2, **characterized in that** the rotary joint (24) forms an axis of rotation (21) about which the guide element (8, 9) and the lever element (23) are rotatable in relation to each other at least in regions, wherein the axis of rotation (21) is oriented parallel to the longitudinal extent of the bearing rod (10).

4. Covering device according to Claim 3, **characterized in that** the respective lever element (23) has a sliding point (29), which is spaced apart from the axis of rotation (21), for resting in a sliding manner on the respective guide rail (4, 5) and is connected fixedly to the bearing rod (10).

5. Covering device according to Claim 4, **characterized in that** the guide rails (4, 5) each have a U-shaped profile and are oriented facing each other, wherein a limb in each case located at the bottom of the guide rails (4, 5) forms a sliding rail (19) on which the respective lever element (23) rests with the sliding point (29).

6. Covering device according to Claim 5, **characterized in that** the respective latching projection (16) of the locking device (14) is arranged/formed on the respective sliding rail (19) in such a slender manner that the respective lever element (23) can be slid with its sliding point (29) on the sliding rail (19) past the latching projection (16).

7. Covering device according to either of Claims 5 and 6, **characterized in that** the guide rails (4, 5) each have, on the limb opposite the latching projection (16), an actuating projection (37) which, in the locking position of the respective guide element (8, 9), is assigned to an actuating end (22) of the respective guide element (8, 9) at a distance from the axis of rotation (21), in order to keep said actuating end on the sliding rail (19) when the bearing rod (10) is tilted in the second direction.

8. Covering device according to one of Claims 2 to 7, **characterized in that** the respective lever element (23) has a rotary entrainer (32) for the respective guide element (8, 9) in order to release the latching lugs (18) from the latching projections (16) when the bearing rod (10) is tilted in the first direction.

9. Covering device according to one of the preceding claims, **characterized in that** the bearing rod (10) as actuating element is assigned an at least substantially stiff end board (11) which is connected fixedly to the bearing rod (10) for the tilting thereof.

10. Covering device according to one of the preceding claims, **characterized in that** the mutually opposite limbs of the respective guide rail (4, 5) run substantially parallel to each other and have an increased distance from each other only in the region of the locking device (14, 39).

## Revendications

1. Dispositif de recouvrement (1) pour un espace de chargement d'un véhicule automobile, comprenant un recouvrement d'espace de chargement (2) au moins en partie flexible, qui peut être sorti d'un dispositif de rangement (3) à l'encontre d'une force de ressort dans une position d'utilisation, le recouvrement d'espace de chargement (2) présentant, à son extrémité libre, une tige de support (10) qui s'étend sur la largeur du recouvrement d'espace de chargement (2) et qui présente à ses extrémités libres à chaque fois un élément de guidage (8, 9),
un dispositif de guidage, qui présente deux rails de guidage (4, 5) s'étendant parallèlement l'un à l'autre, dans lesquels peuvent être guidés les éléments de guidage (8, 9), et
au moins un dispositif de blocage (14, 39) pour le blocage de manière desserrable des éléments de guidage (8, 9) dans les rails de guidage (4, 5), le dispositif de blocage (14, 39) présentant une saillie d'encliquetage (16) dans chaque rail de guidage (4, 5), au niveau de laquelle l'élément de guidage respectif (8, 9) peut s'encliqueter à l'encontre de la force de ressort avec un ergot d'encliquetage (18), et l'ergot d'encliquetage respectif (18), par un basculement de la tige de support (10) dans une première direction au moyen d'un élément d'actionnement, pouvant être soulevé au-dessus de la saillie d'encliquetage respective (16) pour desserrer le blocage, **caractérisé en ce qu'**au moins un dispositif de levier (38) est associé aux éléments de guidage (8, 9) disposés de manière à pouvoir être basculés par rapport à la tige de support (10), lequel dispositif de levier soulève l'ergot d'encliquetage respectif (18) pardessus la saillie d'encliquetage respective (16), lorsque la tige de support (10) est basculée dans une deuxième direction opposée à la première direction.

2. Dispositif de recouvrement selon la revendication 1, **caractérisé en ce que** le dispositif de levier (38) forme, avec l'élément de guidage respectif (8, 9), un levier croisé (35), pour la réalisation duquel l'élément de guidage respectif (8, 9) est connecté en croix par une articulation pivotante (24) à un élément de levier respectif (23).

3. Dispositif de recouvrement selon la revendication 2, **caractérisé en ce que** l'articulation pivotante (24) forme un axe de rotation (21) autour duquel l'élément de guidage (8, 9) et l'élément de levier (23) peuvent tourner l'un par rapport à l'autre au moins en partie, l'axe de rotation (21) étant orienté parallèlement à l'étendue longitudinale de la tige de support (10).

4. Dispositif de recouvrement selon la revendication 3, **caractérisé en ce que** l'élément de levier respectif (23) présente une pointe de glissement (29) espacée par rapport à l'axe de rotation (21) pour l'appui glissant sur le rail de guidage respectif (4, 5), et est connecté fixement à la tige de support (10).

5. Dispositif de recouvrement selon la revendication 4, **caractérisé en ce que** les rails de guidage (4, 5) présentent à chaque fois un profilé en forme de U et sont orientés l'un vers l'autre, une branche des rails de guidage (4, 5), située respectivement en dessous, formant un rail de glissement (19) sur lequel repose l'élément de levier respectif (23) avec la pointe de glissement (29).

6. Dispositif de recouvrement selon la revendication 5, **caractérisé en ce que** la saillie d'encliquetage respective (16) du dispositif de blocage (14) est disposée/réalisée étroitement sur le rail de glissement respectif (19) de telle sorte que l'élément de levier respectif (23) puisse coulisser avec sa pointe de glissement (29) sur le rail de glissement (19) devant la saillie d'encliquetage (16).

7. Dispositif de recouvrement selon l'une quelconque des revendications 5 ou 6, **caractérisé en ce que** les rails de guidage (4, 5) présentent, au niveau de la branche opposée à la saillie d'encliquetage (16), à chaque fois une saillie d'actionnement (37) qui, dans la position de blocage de l'élément de guidage respectif (8, 9), est associée à une extrémité d'actionnement (22) de l'élément de guidage respectif (8, 9) à distance de l'axe de rotation (21), afin de retenir cet élément de guidage contre le rail de glissement (19) lorsque la tige de support (10) est basculée dans la deuxième direction.

8. Dispositif de recouvrement selon l'une quelconque des revendications 2 à 7, **caractérisé en ce que** l'élément de levier respectif (23) présente un entraînement en rotation (32) pour l'élément de guidage respectif (8, 9) afin de desserrer les ergots d'encliquetage (18) des saillies d'encliquetage (16) lorsque la tige de support (10) est basculée dans la première direction.

9. Dispositif de recouvrement selon l'une quelconque des revendications précédentes, **caractérisé en ce qu'**à la tige de support (10) est associé en tant qu'élément d'actionnement un bord d'extrémité au moins essentiellement rigide (11) qui est connecté fixement à la tige de support (10) pour faire basculer cette dernière.

10. Dispositif de recouvrement selon l'une quelconque des revendications précédentes, **caractérisé en ce que** les branches opposées l'une à l'autre du rail de guidage respectif (4, 5) s'étendent essentiellement parallèlement l'une à l'autre et, seulement dans la région du dispositif de blocage (14, 39), présentent un espacement accru l'une par rapport à l'autre.
